# EUROPEAN PATENT APPLICATION

(11) **EP 3 330 735 A1**
(43) Date of publication of application: **06.06.2018**
(21) Application number: 16201694.3
(22) Date of filing: 01.12.2016
(51) Int. Cl.: G01S 13/88, G01S 13/86, G01S 13/66

(54) **SECURITY SCREENING SYSTEM AND METHOD**

(71) Applicant: Luukanen, Arttu, 00380 Helsinki (FI); Petersson, Henrik, 58216 Linköping (SE); Appleby, Roger, Malvern Link, Worcestershire WR14 1DJ (GB); Robertson, Duncan, Kelty Fife KY4 0JS (GB); Hassel, Juha, 02210 Espoo (FI)
(72) Inventor: Luukanen, Arttu, 00380 Helsinki (FI); Petersson, Henrik, 58216 Linköping (SE); Appleby, Roger, Malvern Link, Worcestershire WR14 1DJ (GB); Robertson, Duncan, Kelty Fife KY4 0JS (GB); Hassel, Juha, 02210 Espoo (FI)
(74) Representative: Suominen, Kaisa Liisa

(57) **Abstract**

A method for capturing images of a person for a security screening is provided. A spatial position of the person is detected using a support sensor. Information indicative of the detected spatial position of the person is then received and used to steer a field of view of at least a first set of imaging heads towards the detected spatial position of the person. The at least a first set of imaging heads includes at least one passive imaging head and at least one active imaging head. Images of the person are then captured with the at least a first set of imaging heads. Optionally, the at least one passive imaging head and at least one active imaging head are employed in a sequential manner for capturing the images of the person.

## Description

### TECHNICAL FIELD

The present disclosure relates generally to security cameras; and more specifically, to security screening systems including active and passive imaging heads, for example, operating at a frequencies in the range of 100 GHz to 1000 GHz. Moreover, the present disclosure relates to methods for capturing images of a person for a security screening.

### BACKGROUND

Millimeter or sub-millimeter wave cameras are well known in the art. Millimeter wave cameras can be divided into two categories, namely active cameras and passive cameras. In active cameras, electromagnetic radiation is emitted towards a subject and reflections of the electromagnetic radiation are received for detecting properties of the subject, for example such as a shape of the subject. In passive cameras, electromagnetic radiation emitted by the subject is received and used to construct an image of the subject.

Millimeter wave cameras are typically used for full body scanning for security applications, for example, such as detection of items for commercial loss prevention, screening smuggling activities, and security screening at airports.

However, conventional security screening systems suffer from several disadvantages. Firstly, a person being screened has to remain stationary during a scanning process. Secondly, the scanning process takes a lot of time. Thirdly, in order to enable scanning from all directions, either the person has to turn around or a camera apparatus employed has to move around the person. Fourthly, passive cameras might not have sufficient resolution to be used alone.

### SUMMARY

The present disclosure seeks to provide an improved security screening system.

The present disclosure also seeks to provide an improved method for capturing images of a person for a security screening.

A further aim of the present disclosure is to at least partially overcome at least some of the problems of the prior art, as discussed above.

In a first aspect, embodiments of the present disclosure provide a method for capturing images of a person for a security screening, the method comprising:
- detecting a spatial position of the person;
- receiving information indicative of the detected spatial position of the person;
- steering a field of view of at least a first set of imaging heads towards the detected spatial position of the person, wherein the at least a first set of imaging heads comprises at least one passive imaging head and at least one active imaging head; and
- capturing images of the person with the at least a first set of imaging heads.

In a second aspect, embodiments of the present disclosure provide a security screening system for capturing images of a person, the system comprising:
- at least a first set of imaging heads, the at least a first set of imaging heads comprising at least one passive imaging head and at least one active imaging head;
- a support sensor for detecting a spatial position of the person;
- a control unit for receiving information indicative of the detected spatial position of the person; and
- an actuator controlled by the control unit to steer a field of view of the at least a first set of imaging heads towards the spatial position of the person as detected with the support sensor.

Embodiments of the present disclosure substantially eliminate or at least partially address the aforementioned problems in the prior art, and facilitate a security screening rapidly, without causing any inconvenience to a person being screened.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1: is a schematic illustration of an example environment, wherein a security screening system is implemented pursuant to embodiments of the present disclosure;
- FIGs. 2A and 2B: collectively are a schematic illustration of how an instantaneous field of view of an imaging head is steered, in accordance with an embodiment of the present disclosure;
- FIG. 3: is a schematic illustration of an example implementation of a security screening system, in accordance with an embodiment of the present disclosure;
- FIG. 4: is a schematic illustration of another example implementation of a security screening system, in accordance with an embodiment of the present disclosure;
- FIG. 5: is a schematic illustration of a set of imaging heads, in accordance with an embodiment of the present disclosure; and
- FIG. 6: is an illustration of steps of a method for capturing images of a person for a security screening, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

### GLOSSARY

Brief definitions of terms used throughout the present disclosure are given below.

The term "field of view" generally refers to a volume in space through which an imaging head is sensitive to electromagnetic radiation. The term "instantaneous field of view" is used to refer to a volume in space through which an imaging head is sensitive to electromagnetic radiation at any given instant. By "video" it is meant a sequence of images.

The terms "connected" or "coupled" and related terms are used in an operational sense and are not necessarily limited to a direct connection or coupling. Thus, for example, two devices may be coupled directly, or via one or more intermediary media or devices. As another example, devices may be coupled in such a way that information can be passed there between, while not sharing any physical connection with one another. Based on the present disclosure provided herein, one of ordinary skill in the art will appreciate a variety of ways in which connection or coupling exists in accordance with the aforementioned definition.

The phrases "in an embodiment", "in accordance with an embodiment" and the like generally mean the particular feature, structure, or characteristic following the phrase is included in at least one embodiment of the present disclosure, and may be included in more than one embodiment of the present disclosure. Importantly, such phrases do not necessarily refer to the same embodiment.

If the specification states a component or feature "may", "can", "could", or "might" be included or have a characteristic, that particular component or feature is not required to be included or have the characteristic.

In a first aspect, embodiments of the present disclosure provide a method for capturing images of a person for a security screening, the method comprising:
- detecting a spatial position of the person;
- receiving information indicative of the detected spatial position of the person;
- steering a field of view of at least a first set of imaging heads towards the detected spatial position of the person, wherein the at least a first set of imaging heads comprises at least one passive imaging head and at least one active imaging head; and
- capturing images of the person with the at least a first set of imaging heads.

According to an embodiment of the present disclosure, the method further comprises employing the at least one passive imaging head and the at least one active imaging head of the at least a first set of imaging heads in a sequential manner for capturing the images of the person. By sequential manner it is here meant a non-simultaneous manner.

According to an embodiment of the present disclosure, the method further comprises:
- capturing images of the person with at least a second set of imaging heads, the at least a second set of imaging heads comprising at least one passive imaging head and at least one active imaging head; and
- arranging for the at least a first set of imaging heads and the at least a second set of imaging heads to be spaced at a distance from each other, so as to enable capturing of the images of the person from at least two different directions at a same time.

Optionally, in this regard, the method further comprises:
- receiving the captured images from the at least a first set of imaging heads and from the at least a second set of imaging heads; and
- using the captured images received from the at least a first set of imaging heads and from the at least a second set of imaging heads to render images of the person from the at least two different directions.

In a second aspect, embodiments of the present disclosure provide a security screening system for capturing images of a person, the system comprising:
- at least a first set of imaging heads, the at least a first set of imaging heads comprising at least one passive imaging head and at least one active imaging head;
- a support sensor for detecting a spatial position of the person;
- a control unit for receiving information indicative of the detected spatial position of the person; and
- an actuator controlled by the control unit to steer a field of view of the at least a first set of imaging heads towards the spatial position of the person as detected with the support sensor.

According to an embodiment of the present disclosure, the control unit is configured to employ the at least one passive imaging head and the at least one active imaging head of the at least a first set of imaging heads in a sequential manner to capture images of the person.

According to an embodiment of the present disclosure, the support sensor is a camera operating in visible light range. The support sensor is selected from a group comprising a visible imaging sensor, an infrared imaging sensor, a range finding sensor, a light gate and a pressure sensing floor mat. For example, the sensor may use laser or ultrasound.

According to an embodiment of the present disclosure, the system further comprises at least a second set of imaging heads, wherein the at least a second set of imaging heads is arranged at a distance from the at least a first set of imaging heads so as to enable capturing of the images of the person from at least two different directions at a same time.

According to an embodiment of the present disclosure, the at least one passive imaging head operates at frequencies at the range of 100 GHz to 1000 GHz, and the at least one active imaging head operates at frequencies at the range of 100 GHz to 1000 GHz.

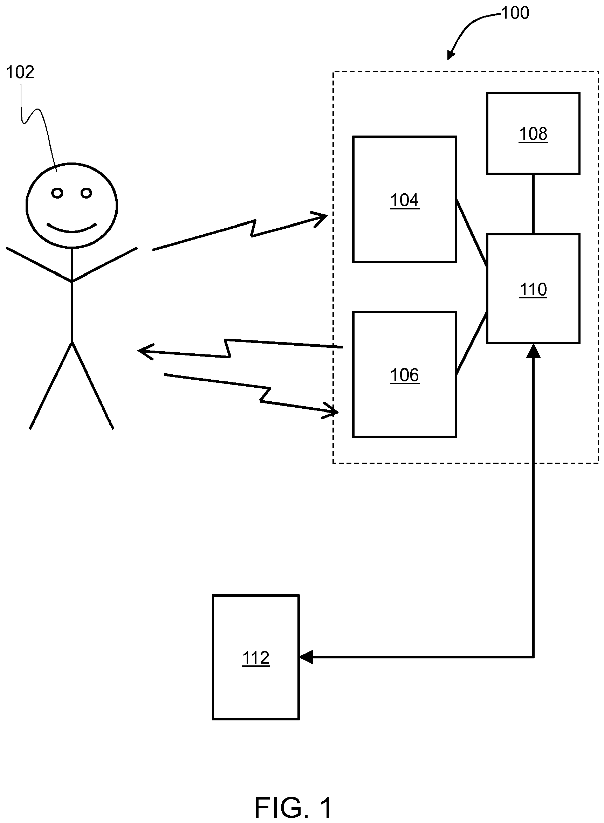

For illustration purposes only, there will now be considered an example environment, wherein a security screening system is implemented pursuant to embodiments of the present disclosure. One such example environment has been illustrated in conjunction with FIG. 1 as explained in more detail below.

In the example environment, the security screening system is implemented to capture images of a subject, for example a person being screened for security purposes. The security screening system includes at least one set of imaging heads, including at least one passive imaging head and at least one active imaging head, a support sensor and a control unit.

The at least one passive imaging head is configured to receive electromagnetic radiation emitted by the subject, for example, such as heat emitted by the subject. Optionally, the electromagnetic radiation emitted by the subject has frequencies in the range of 100 GHz to 1000 GHz.

The at least one active imaging head is configured to send electromagnetic radiation towards the subject and to receive reflections of the electromagnetic radiation. Optionally, the electromagnetic radiation employed by the at least one active imaging head has frequencies in the range of 100 GHz to 1000 GHz.

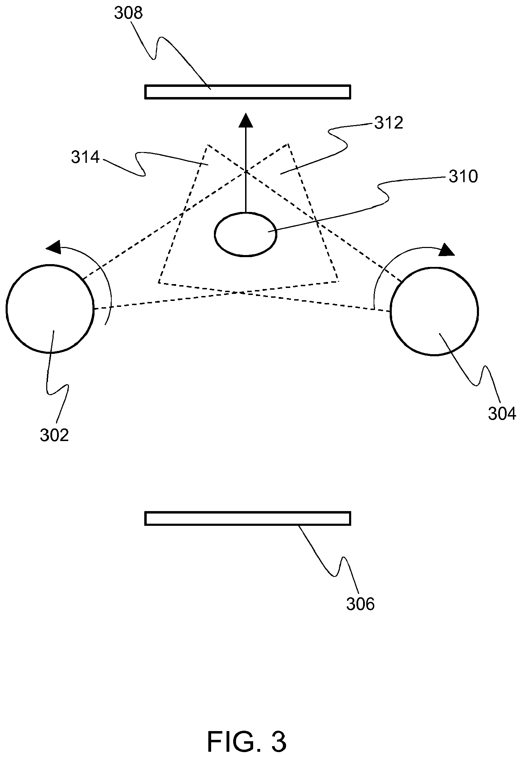

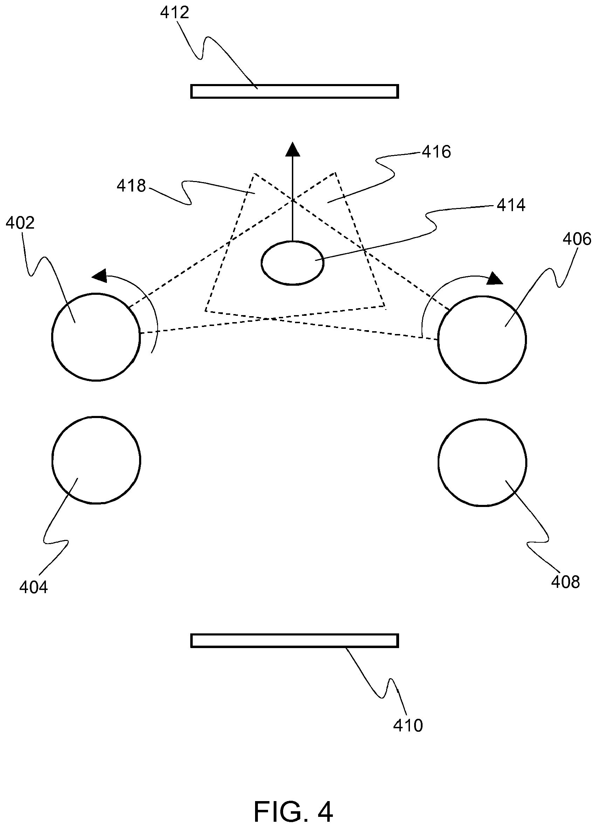

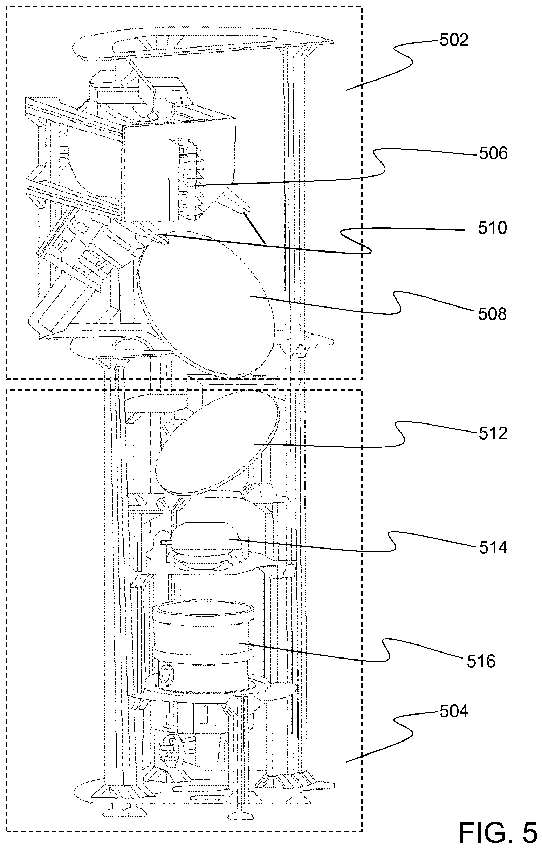

Optionally, the at least one passive imaging head and the at least one active imaging head are physically located in a same device, for example as illustrated later in FIGs. 3 and 5. Alternatively, optionally, the at least one passive imaging head and the at least one active imaging head are physically located in separate devices, for example as illustrated later in FIG. 4.

The support sensor is used to detect a spatial position of the subject. Optionally, the support sensor is configured to track visually a path traversed by the subject. Optionally, the support sensor is a camera operating in visible light range. In an example, the support sensor is implemented by way of a web camera. The support sensor may also be a range finder.

Optionally, the support sensor is physically located on the same device as the at least one set of imaging heads. Alternatively, optionally, the support sensor is physically remote from the at least one set of imaging heads.

The support sensor is coupled in communication with the control unit either via a communication network or via a direct connection.

Moreover, the support sensor is configured to send information indicative of the detected spatial position of the subject to the control unit. Optionally, the spatial position of the subject is provided in a local coordinate system of the security screening system. This enables the control unit to determine a direction and a distance of the subject from the at least one passive imaging head and the at least one active imaging head.

Accordingly, the control unit controls an actuator associated with the at least one set of imaging heads to steer an instantaneous field of view of the at least one set of imaging heads towards the spatial position of the subject as detected with the support sensor.

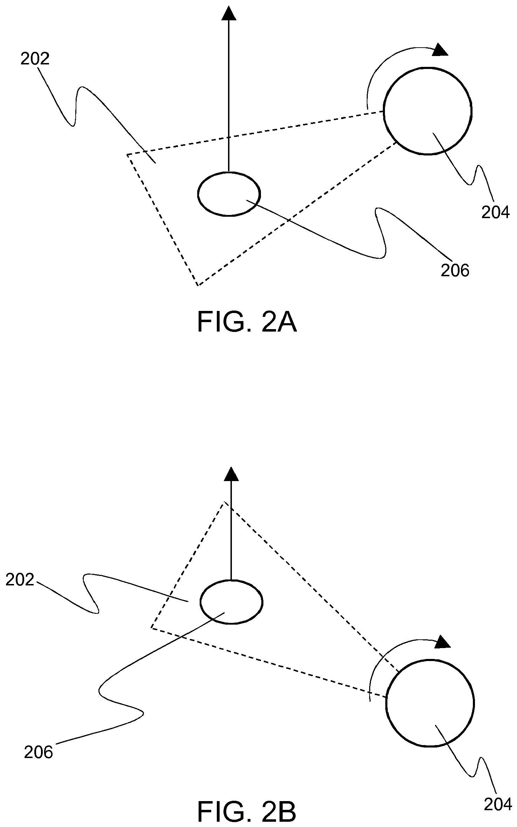

Optionally, the actuator is a part of mechanics that is employed to steer the instantaneous field of view of the at least one passive imaging head and/or the at least one active imaging head. Optionally, the instantaneous field of view is steered by rotating a panning mirror using the actuator, without rotating the entire structure of the at least one passive imaging head and/or the at least one active imaging head. Alternatively, optionally, the instantaneous field of view is steered by rotating the entire structure of the at least one passive imaging head and/or the at least one active imaging head. An example implementation of how the instantaneous field of view is steered has been illustrated later in conjunction with FIGs. 2A and 2B.

Moreover, according to an embodiment of the present disclosure, the control unit is configured to employ the at least one passive imaging head and the at least one active imaging head in a sequential manner to capture the images of the subject.

Optionally, in this regard, the at least one passive imaging head and the at least one active imaging head are employed in an alternating manner, such that electromagnetic radiation emitted by the at least one active imaging head does not interfere with the operation of the at least one passive imaging head. Optionally, when employed in the alternating manner, one of the at least one passive imaging head and the at least one active imaging head is operated for a predefined time period before the other is operated for the predefined time period. The predefined time period can be either user-defined or system-defined by default. As an example, the predefined time period can be one second, 500 milliseconds, and so on.

For illustration purposes only, there will now be considered some examples of how the at least one passive imaging head and the at least one active imaging head can be employed in a sequential manner pursuant to embodiments of the present disclosure. In these examples, there will be considered that the security screening system is implemented in a security screening zone, wherein images of a person walking through the security screening zone are captured using the at least one passive imaging head and the at least one active imaging head.

In a first example, when a person is at an entrance of the security screening zone, the instantaneous field of view of the at least one active imaging head is steered towards the entrance and the at least one active imaging head is employed to capture at least one image of the person. The at least one image is then processed to perform an initial screening of the person. The initial screening is optionally used to determine whether or not an improved resolution or additional images are needed between the entrance and an exit of the security screening zone. Accordingly, when the person is moving between the entrance and the exit, the instantaneous field of view of the at least one passive imaging head is steered to follow the person and the at least one passive imaging head is employed to capture at least one additional image of the person with a desired resolution.

Additionally, optionally, when the person is at the exit, the instantaneous field of view of the at least one active imaging head is steered towards the exit and the at least one active imaging head is employed to capture at least one additional image of the person.

In a second example, when a person is moving between the entrance and the exit, the at least one passive imaging head is employed to capture images of the person, which images are then processed to perform an initial screening of the person. If the initial screening is unclear or an unclear object is found, for example beneath the person's clothes, the at least one active imaging head is employed to capture additional images of the person, namely images having a better resolution. Otherwise, if no unclear or suspicious object is found in the initial screening of the person, the at least one active imaging head is not used at all. In this way, an amount of possible radiation emitted from the at least one active imaging head towards the person is reduced.

In a third example, the at least one passive imaging head is employed to capture images of a person to perform an initial screening of the person. If no unclear or suspicious object is found in the initial screening, the at least one active imaging head is employed to capture additional images of the person to verify that there is no suspicious object. In this way, an improved level of security is achieved without a need to use the at least one active imaging head all the time, which could lead to energy saving of the device.

Furthermore, the control unit is configured to receive the captured images from the at least one set of imaging heads. The control unit is coupled in communication with the at least one set of imaging heads either via a direct connection or via the communication network.

Optionally, the control unit is configured to process the captured images. Optionally, in this regard, the control unit is configured to merge the images captured by the at least one passive imaging head and the at least one active imaging head to produce images having a better resolution. Optionally the image merging and analysis can take place in another unit or for example in a server system.

Alternatively, optionally, the images captured by the at least one set of imaging heads are processed and/or merged by an external processing device. Furthermore, optionally the support sensor information can be used when processing images as well as when calibrating imaging heads. The external processing device can be a cloud service.

Furthermore, during processing, information from the support sensor(s) can be used to determine pose of the person being imaged. The pose can be used to enhance data processing, for example to indicate on which part of the person (hand, arm, leg etc.) a suspect object is located.

Optionally, the control unit is configured to send the image as raw image data or processed image data to a remote terminal, via the communication network. At the remote terminal, the images are rendered on a display, for example, to be viewed by security personnel.

Examples of the remote terminal include, but are not limited to, smart telephones, Mobile Internet Devices (MIDs), tablet computers, Ultra-Mobile Personal Computers (UMPCs), phablet computers, Personal Digital Assistants (PDAs), web pads, Personal Computers (PCs), handheld PCs, laptop computers, desktop computers, large-sized touch screens with embedded PCs, and other interactive devices, such as Television (TV) sets.

The communication network can be a collection of individual networks, interconnected with each other and functioning as a single large network. Such individual networks may be wired, wireless, or a combination thereof. Examples of such individual networks include, but are not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, Worldwide Interoperability for Microwave Access (WiMAX) networks, and short-range wireless communications network, such as a "Bluetooth" network ("Bluetooth" is a registered trademark).

For illustration purposes only, there will now be considered an example implementation of a security screening system pursuant to embodiments of the present disclosure. One such implementation of a security screening system has been illustrated in conjunction with FIG. 3 as explained in more detail below.

In the example implementation, the security screening system includes, *inter alia,* a support sensor and two sets of imaging heads, wherein each of the two sets of imaging heads include at least one passive imaging head and at least one active imaging head.

According to an embodiment of the present disclosure, the two sets of imaging heads are arranged at a distance from each other, so as to enable capturing of images of a subject from two different directions at a same time.

In the example implementation, a person walks into a security screening zone via an entrance and exits the security screening zone via an exit. Optionally, the entrance and the exit are marked on a ground surface. Alternatively, optionally, the entrance and the exit are physically defined, for example, in a form of a gate or a fence. Beneficially, only one person is allowed to walk through the security screening zone at a given time.

Optionally, the two sets of imaging heads are arranged on opposite sides of the security screening zone.

When the person walks through the security screening zone, the support sensor detects spatial positions of the person at different instances of time. Instantaneous fields of view of the two sets of imaging heads are then steered towards a current spatial position of the person, so as to capture images of the person from two different directions at the same time.

For illustration purposes only, there will now be considered an example implementation of a set of imaging heads pursuant to embodiments of the present disclosure. One such set of imaging heads has been illustrated in conjunction with FIG. 5 as explained in more detail below.

The set of imaging heads includes an active imaging head and a passive imaging head.

The active imaging head is configured to record a three-dimensional (3D) shape map of a subject. In operation, the active imaging head emits a focussed beam to scan the subject across its instantaneous field of view in azimuth and elevation. The spot size of the focussed beam can be for example in the order of 1 cm. The beam is generated and analysed with a multichannel transceiver of the active imaging head. For each line of sight, the active imaging head takes a time-of-flight measurement. This yields a set of range profiles over a range of distances encompassed by a search volume in the instantaneous field of view. The range profiles are then processed to extract a surface map in which concealed objects are revealed.

According to an embodiment of the present disclosure, the active imaging head is employed to capture images of the subject when the subject is at an entrance or an exit of a security screening zone. The active imaging head includes a panning mirror for steering the instantaneous field of view of the active imaging head in azimuth, for example from the entrance to the exit.

In this embodiment, the active imaging head is not employed to capture images of the subject whilst the subject is moving. This potentially removes a need to refocus optics of the active imaging head and minimizes geometric distortions introduced by the movement of the subject during beam scanning.

Optionally, the active imaging head operates at frequencies in the range of 100 GHz to 1000 GHz. More optionally, the active imaging head operates at a frequency of substantially 340 GHz. Optionally, the active imaging head uses a wideband Frequency-Modulated Continuous-Wave (FMCW) chirp waveform to achieve sub-centimetre range bins.

Optionally, the multichannel transceiver includes a plurality of homodyne transceivers using self-mixing multiplier technology, wherein the plurality of homodyne transceivers are arranged in a form of a sparse focal plane array. In an example implementation, the multichannel transceiver includes 16 homodyne transceivers.

Optionally, the beam scanning is achieved by using a high-speed double-disc scanner of the active imaging head for a fast linear scan in one direction, in combination with a slow reciprocating mirror in an orthogonal direction. Optionally, in order to achieve a mechanical scanning rate that is feasible, the instantaneous field of view is limited to predefined dimensions at imaging locations. As an example, the instantaneous field of view can be limited to approximately 1 m x 1 m at the imaging locations.

Furthermore, the passive imaging head is configured to record two-dimensional (2D) radiometric images of spatial distribution of thermal radiation emitted by the subject.

Optionally, the passive imaging head is configured to record the 2D images of the spatial distribution of the thermal radiation having at least two frequency bands. More optionally, the passive imaging head employs two frequency bands, wherein one of the two frequency bands is centred substantially at 250 GHz (hereinafter referred to as "250 GHz radiation"), and another of the two frequency bands is centred substantially at 500 GHz (hereinafter referred to as "500 GHz radiation"). In such a case, the passive imaging head is configured to capture separate images corresponding to the at least two frequency bands in real time.

As these images are at well-separated frequencies, these images contain different information. In particular, the 250 GHz radiation has a better penetration through clothing, but has a lower spatial resolution, whereas the 500 GHz radiation has a poorer penetration through the clothing, but has a higher spatial resolution. The images are transferred for subsequent processing to identify anomalous objects concealed under the clothing.

The passive imaging head includes a scanner mirror, optics and a plurality of detectors arranged within a detector chamber. The sensor array may be a 2D sensor array containing a large number of detectors that sample the field of view. Therefore, such an arrangement does not need any scanning optics and thus a lense is sufficient for beam formation.

Optionally, the detector chamber is a vacuum housing with dual-stage cryo-coolers to cool down the detectors.

Optionally, the detectors are implemented by way of transition-edge bolometers.

### DETAILED DESCRIPTION OF DRAWINGS

Referring now to the drawings, particularly by their reference numbers, FIG. 1 is a schematic illustration of an example environment, wherein a security screening system **100** is implemented pursuant to embodiments of the present disclosure.

With reference to FIG. 1, the security screening system **100** is implemented to capture images of a person **102** being screened for security purposes. The security screening system **100** includes at least one set of imaging heads, including a passive imaging head **104** and an active imaging head **106,** a support sensor **108** and a control unit **110.**

In FIG. 1, there is also shown a remote terminal **112** that is configured to receive images captured by the security screening system **100** as raw image data or processed image data, for example, via a communication network.

FIG. 1 is merely an example, which should not unduly limit the scope of the present disclosure. It is to be understood that the illustration of the security screening system **100** is provided as an example and is not limited to a specific number and/or arrangement of imaging heads and support sensors. A person skilled in the art will recognize many variations, alternatives, and modifications of embodiments of the present disclosure.

FIGs. 2A and 2B collectively are a schematic illustration of how an instantaneous field of view **202** of an imaging head **204** is steered, in accordance with an embodiment of the present disclosure.

A person **206** is walking in a direction as indicated with an arrow, for example, from an entry point of a security screening zone towards an exit point of the security screening zone.

In FIG. 2A, there is shown the instantaneous field of view **202** of the imaging head **204** that is directed towards a current spatial position of the person **206.**

As the person **206** walks forward, the spatial position of the person **206** changes. Accordingly, the instantaneous field of view **202** of the imaging head **204** is steered so as to follow the person **206,** as shown in FIG. 2B.

FIGs. 2A and 2B are merely examples, which should not unduly limit the scope of the present disclosure. A person skilled in the art will recognize many variations, alternatives, and modifications of embodiments of the present disclosure.

FIG. 3 is a schematic illustration of an example implementation of a security screening system, in accordance with an embodiment of the present disclosure.

The security screening system includes, *inter alia,* at least two sets of imaging heads, depicted as a first set **302** of imaging heads and a second set **304** of imaging heads in FIG. 3.

In FIG. 3, there is shown a security screening zone between an entrance **306** and an exit **308.** The first set **302** and the second set **304** are arranged on opposite sides of the security screening zone, as shown in FIG. 3.

When a person **310** walks through the security screening zone, for example as indicated with a straight arrow, instantaneous fields of view **312** and **314** of the first set **302** of imaging heads and the second set **304** of imaging heads, respectively, are steered in operation, for example as indicated with curved arrows, to capture images of the person **310** from two different directions at a same time.

With reference to FIG. 3, each of the first set **302** and the second set **304** includes at least one passive imaging head and at least one active imaging head that are physically located in a same device.

FIG. 4 is a schematic illustration of another example implementation of a security screening system, in accordance with an embodiment of the present disclosure.

The security screening system includes, *inter alia,* at least two sets of imaging heads, depicted as a first set of imaging heads, including a passive imaging head **402** and an active imaging head **404,** and a second set of imaging heads, including a passive imaging head **406** and an active imaging head **408,** in FIG. 4. The passive imaging head **402** and the active imaging head **404** are physically located in separate devices. Likewise, the passive imaging head **406** and the active imaging head **408** are physically located in separate devices.

In FIG. 4, there is shown a security screening zone between an entrance **410** and an exit **412.** The first and second sets of imaging heads are arranged on opposite sides of the security screening zone, as shown in FIG. 4.

In FIG. 4, there is shown an example situation where, in operation, the passive imaging heads **402** and **406** are capturing images of a person **414** from two different directions at a same time. Instantaneous fields of view **416** and **418** of the passive imaging heads **402** and **406,** respectively, are also shown in FIG. 4.

FIGs. 3 and 4 are merely examples, which should not unduly limit the scope of the present disclosure. A person skilled in the art will recognize many variations, alternatives, and modifications of embodiments of the present disclosure.

FIG. 5 is a schematic illustration of a set of imaging heads, in accordance with an embodiment of the present disclosure.

The set of imaging heads includes an active imaging head **502** and a passive imaging head **504.**

The active imaging head **502** includes a multichannel transceiver **506,** a panning mirror **508** and a high-speed double-disc scanner **510.**

The passive imaging head **504** includes a scanner mirror **512,** optics **514** and a plurality of detectors arranged within a detector chamber **516.**

FIG. 5 is merely an example, which should not unduly limit the scope of the present disclosure. A person skilled in the art will recognize many variations, alternatives, and modifications of embodiments of the present disclosure.

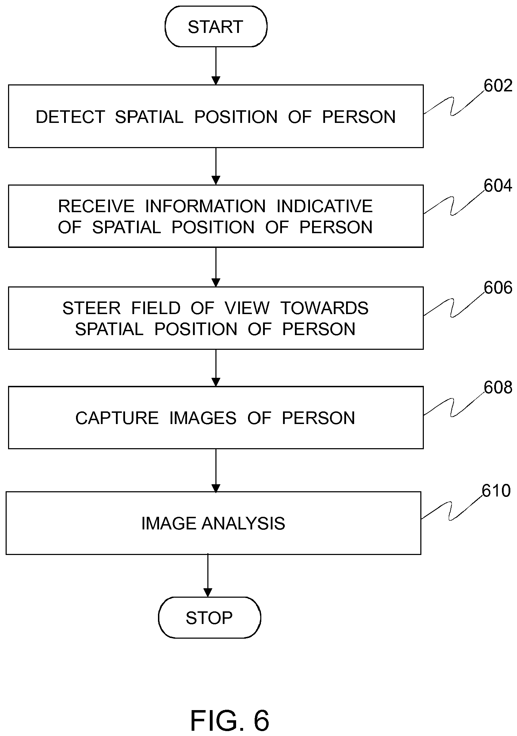

FIG. 6 is an illustration of steps of a method for capturing images of a person for a security screening, in accordance with an embodiment of the present disclosure. The method is depicted as a collection of steps in a logical flow diagram, which represents a sequence of steps that can be implemented in hardware, software, or a combination thereof.

At a step **602,** a spatial position of the person is detected. At a step **604,** information indicative of the detected spatial position of the person is received. At a step **606,** an instantaneous field of view of at least a first set of imaging heads is steered towards the detected spatial position of the person, wherein the at least a first set of imaging heads includes at least one passive imaging head and at least one active imaging head

At a step **608,** images of the person are captured with the at least a first set of imaging heads. At a step **610,** images of a subject (a person) are analyzed (for example by automatic anomalies detection) to yield the status of the decision on the status of the subject to an operator.

The steps **602** to **608** are only illustrative and other alternatives can also be provided where one or more steps are added, one or more steps are removed, or one or more steps are provided in a different sequence without departing from the scope of the claims herein.

Embodiments of the present disclosure are susceptible to being used for various purposes, including, though not limited to, facilitating a security screening rapidly, without causing any inconvenience to a person being screened.

Modifications to embodiments of the present disclosure described in the foregoing are possible without departing from the scope of the present disclosure as defined by the accompanying claims. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for capturing images of a person for a security screening, the method comprising:
- detecting a spatial position of the person;
- receiving information indicative of the detected spatial position of the person;
- steering a field of view of at least a first set of imaging heads towards the detected spatial position of the person, wherein the at least a first set of imaging heads comprises at least one passive imaging head and at least one active imaging head; and
- capturing images of the person with the at least a first set of imaging heads.

2. A method according to claim 1, wherein the method further comprises employing the at least one passive imaging head and the at least one active imaging head of the at least a first set of imaging heads in a sequential manner for capturing the images of the person.

3. A method according to any of the preceding claims, wherein the method further comprises:
- capturing images of the person with at least a second set of imaging heads, the at least a second set of imaging heads comprising at least one passive imaging head and at least one active imaging head; and
- arranging for the at least a first set of imaging heads and the at least a second set of imaging heads to be spaced at a distance from each other, so as to enable capturing of the images of the person from at least two different directions at a same time.

4. A method according to claim 3, wherein the method further comprises:
- receiving the captured images from the at least a first set of imaging heads and from the at least a second set of imaging heads; and
- using the captured images received from the at least a first set of imaging heads and from the at least a second set of imaging heads to render images of the person from the at least two different directions.

5. A method according to any of claims 1-4, wherein the at least one passive imaging head is configured to operate at frequencies in the range of 100 GHz to 1000 GHz.

6. A method according to any of claims 1-5, wherein the at least one active imaging head is configured to operate at frequencies in the range of 100 GHz to 1000 GHz.

7. A security screening system for capturing images of a person, the system comprising:
- at least a first set of imaging heads, the at least a first set of imaging heads comprising at least one passive imaging head and at least one active imaging head;
- a support sensor for detecting a spatial position of the person;
- a control unit for receiving information indicative of the detected spatial position of the person; and
- an actuator controlled by the control unit to steer a field of view of the at least a first set of imaging heads towards the spatial position of the person as detected with the support sensor.

8. A system according to claim 7, wherein the control unit is configured to employ the at least one passive imaging head and the at least one active imaging head of the at least a first set of imaging heads in a sequential manner to capture images of the person.

9. A system according to claim 7 or 8, wherein the support sensor is selected from a group comprising a visible imaging sensor, an infrared imaging sensor, a range finding sensor, a light gate and a pressure sensing floor mat.

10. A system according to any of claims 7-9, wherein the system further comprises at least a second set of imaging heads, and the at least a second set of imaging heads is arranged at a distance from the at least a first set of imaging heads so as to enable capturing of the images of the person from at least two different directions at a same time.

11. A system according to any of claims 7-10, wherein the at least one passive imaging head operates at frequencies in the range of 100 GHz to 1000 GHz.

12. A system according to any of claims 7-11, wherein the at least one active imaging head operates at frequencies in the range of 100 GHz to 1000 GHz.
